(19) **Europäisches Patentamt**

**European Patent Office**

**Office européen des brevets**

(11) **EP 1 278 168 B1**

(12) **EUROPEAN PATENT SPECIFICATION**

(45) Date of publication and mention
of the grant of the patent:
**29.11.2006 Bulletin 2006/48**

(51) Int Cl.:
***G07F 19/00*** *(2006.01)*

(21) Application number: **01117212.9**

(22) Date of filing: **16.07.2001**

(54) **Security module for an account management system**

Sicherheitsmodul für ein Kontenverwaltungssystem

Module de sécurité pour un système de gestion de compte

(84) Designated Contracting States:
**AT BE CH CY DE DK ES FI FR GB GR IE IT LI LU MC NL PT SE TR**

(43) Date of publication of application:
**22.01.2003 Bulletin 2003/04**

(73) Proprietor: **Francotyp-Postalia GmbH 16547 Birkenwerder (DE)**

(72) Inventors:
• **Bleumer, Gerrit 16552 Schildow (DE)**
• **Heinrich, Clemens 10717 Berlin (DE)**

(74) Representative: **Eisenführ, Speiser & Partner Patentanwälte Rechtsanwälte Postfach 10 60 78 28060 Bremen (DE)**

(56) References cited:
**WO-A-00/62259     WO-A-01/35355**
**WO-A-98/30985     US-A- 5 764 789**

## Description

The invention relates to a security module for a host device of an account management system, to a host device for exchanging electronic goods, services, data and/or funds between other host devices of an account management system and to an account management system. Further, the invention relates to a method for exchanging electronic goods, services, data and/or funds between host devices of an account management system, in particular an end-customer host device, a gateway host device and a bank host device, and to a computer program product.

Traditionally, financial institutions manage customer accounts within their own organisations. Integrity and confidentiality of customer accounts are protected by a variety of organisational, administrative and electronic measures as well as a legal frame work of liabilities and insurances. In order to move financial data around between financial organisations, closed financial networks are in use, which are sufficiently protected against access from the non-financial world.

In an electronic payment system electronic goods, services, data and/or funds are exchanged between different host devices. An electronic payment occurs if a payer purchases some goods or services from a payee and pays for them by money in electronic form wherein payer and payee can interact in several ways to perform the payment. Electronic payments require a support chain connecting the payer's bank via the payer and the payee right up to the payee's bank. As a result of an electronic payment, real money is moved from the payer's bank to the payee's bank. There are different business models into which the electronic payment is embedded, like the pre-paid, the pay-later or the pay-now business model.

Other business models for electronic payment include payment by credit card, payment by electronic check, payment by electronic cash and staged electronic payment. There are many services which are not paid at the time they are ordered. Reasons for not paying at ordering time are:

- because there is a time delay between ordering a service and fulfilling the service. Sometimes it is not even determined at ordering time, when the service will be fulfilled, or the payer wants to remain flexible of when to use the ordered service. If such services are pre-paid the payer is usually granted some kind of ticket, voucher, stamp, traveller check, etc. If such services are paid later, the payer is usually billed by the payee.
- because a service is used very often. Usually it is again not clear at ordering time how often (how long, when, etc.) the service will be used. If such services are pre-paid the payer is usually granted some accumulative ticket, e. g., a season ticket. If such services are paid later, e. g., telephone or utility usage, the payer is usually billed by the payee.
- the pay-later model can be implemented by traditional means of payment such as billing the customer. The present invention refers particularly to staged electronic pre-payments, i. e., pre-payments done in several stages. When the payer orders a service he pays for it and gets a ticket, voucher, stamp, traveller check, etc. (stage one). When he actually demands service fulfilment, her spends the respective ticket, voucher, etc. (stage two). There may be more stages if there are additional points of commitment before service fulfilment.

The connection between the payer and his bank is usually established by a payer gateway which stores and forwards electronic money from a payer's bank account to the payer's host device (end-customer host device). Similarly the connection between the payee and his bank is established by a payee gateway which stores and forwards electronic money or an equivalent such as payment authorizations for credit card payments from the payee's host device back to his bank account. Almost all of today's payer and payee gateways are operated by some bank or credit card company. As such, the payer and payee gateways are connected to a trusted financial network and they are operated in a "friendly environment" - at least from the point of view of the financial industry. In order to introduce new electronic services rapidly, third party entrepreneurs should be enabled to develop and deploy their own payer and payee gateways, which will be customized to their particular kind of electronic service and business model. In most cases, third party operated payer and payee gateways will have to be certified or approved by some financial institution, potential regulators of the particular electronic service provided and/or by tax authorities.

It is therefore an object of the present invention to provide a security module for a host device of an account management system which allows third party entrepreneurs to introduce electronic services and payer or payee gateways to charge their customers for these services and which guarantees a high level of tamper resistance and confidentiality of all customer accounts. Another object of the invention is to provide a gateway host device and an account management system having such features.

These objects are achieved by a security module as claimed in claim 1 comprising:

These objects are further achieved by a host device as claimed in claim 12 comprising:

interfaces for connecting to other host devices of an account management system, in particular to end-customer host devices and bank host devices, a database unit for storing account data of a customer account, and

a security device as defined above.

This host device is preferably implemented as gateway host device and may also comprise means, preferably a software component, which ensure the integrity and completeness of all audit and transaction data.

Still further, these objects are achieved by an account management system as claimed in claim 14 comprising:

an end-customer host device,
a bank host device, and
a host device according to claim 12 connected to said end-customer host
device and said bank host device for exchanging electronic goods, services, data and/or funds between said host devices.

The account management system according to the invention, which shall be referred to as "ultra secure account management system" in the following, is adopted by gateway hosts that are operated in "hostile environments" and connect to secure end points over untrusted networks, a bank host and a secure end-customer host such as an electronic wallet. The core component of the ultra secure account management system is the hardware security module that

- hosts the stacks of payments protocols that are used to serve both end-points,
- guarantees strong integrity of all customer accounts,
- optionally guarantees integrity and completeness of all audit and/or transaction data and strong confidentiality of all customer accounts, and
- ensures safe roll-back mechanisms in case of aborted funds transfer.

These integrity authentication and confidentiality features are guaranteed even if the gateway host is operated in a most hostile environment where the operating system super user and the database management system administrator collaborate and launch a sophisticated attack on the customer account database of the gateway host. In terms of the ISO-OSI model, ultra secure account management means account integrity and optional account confidentiality as well as message authentication and optional message confidentiality at application layer (end-to-end security).

The ultra secure account management system according to the invention is based on the tamper resistance of the hardware security module employed by the gateway host device. Thus, most of the risk analysis necessary in conventional account management systems is reduced to a proper evaluation of the hardware security module. Since hardware security modules are probably orders of magnitude less complex than the whole gateway host including hardware, software, procedures, site security, personnel security, etc., it is probably much cheaper and faster to get an ultra secure account management system approved by banking institutions, regulating bodies and/or tax authorities than a traditional account management system.

According to the invention check codes for customer accounts of the host device are stored in a directory module of the security module. Such check codes are generated using account data of the corresponding customer account. If the security module and/or the host device including the security module is requested to process account data of a customer account, e. g. to read or update customer account data or to change the account value such check codes are used for verification of the customer account, i. e. for checking if the account data stored in the host device have been modified since they have been last updated or read by the account management system. Only if this verification succeeds, the ultra secure account management system will process a request on the customer account data. Otherwise a recovery procedure will be launched that analyses the current state of the customer account data taking into account or number of evidences such as backup tapes. It is thus possible in case of database corruptions or system failures during transactions to identify such problems and to recover the previous state of the customer account data.

Ultra secure account management proposed by the present invention thus allows to protect financial data and customer accounts at the highest level possible, at application layer. As such, ultra secure account management makes much less use of organisational and administrative security measures, yet builds technical and cryptographic security measures right into the database and network systems that handle the account data. The advantages of ultra secure account management are two-fold: unprecedented levels of robustness against insider fraud within the banking industry and financial institutions, and a safe way to outsource customer account management to companies that can add value to the end-customer, but are not connected to the dedicated financial networks.

Preferred embodiments of the invention are included in the dependent claims. Preferably the check code for a customer account is generated by the management module of the security module using the account number, the customer name and the account value of said customer account. Such customer account data are stored in a corresponding database in the host device in which the security module is included. While such customer account data can be manipulated, theoretically the check code is only stored in the security module and not accessible from the outside, i. e. the check codes cannot be manipulated. e. g. recalculated for modified data. The proposed method for generating the check codes is a simple and fast method. In general, the check codes can also be generated using different or more data of a customer account.

Depending on the application it might be sufficient to use a simple hash code as check code. However, it is almost as efficient to compute a message authentication code which will be safer. In addition, the use of an authentication code avoids the extra risk of malicious custom software inside the security module, which might manipulate the directory module and produce proper hash values for the manipulated data in order to cover up the manipulation.

If the directory module shall be inspected and verified by other entities than the security module, then alternatively a digital signature mechanism is most appropriate. In this case, all the potentially verifying entities can share the verifying key without putting the signing key of the account management system at risk.

According to another preferred embodiment the security module comprises encryption and decryption means. All data exchanged between the security module and a host device are thus encrypted in order to further increase the level of protection against any manipulations. The internal encryption key may be stored in a volatile memory like a RAM device which can be zeroized in case someone attempts to tamper the encryption and decryption means of the security module.

In order to provide some mechanical means of protection the security module is preferably encapsulated in tamper resistant or responsive hardware within the host device.

Since the number of customer accounts handled by a host device can be very high the security module can also be split up into a number of security submodules each storing a subset of check codes for a subset of customer accounts as proposed according to another preferred embodiment.

A preferred application of the security module proposed according to the invention is the implementation in a gateway host device connected to other host devices of an account management system, in particular to end-customer host devices and bank host devices, for exchanging electronic goods, services, data and/or funds. The hardware security module embedded into or attached to the gateway host device is trusted since it is assumed to be certified according to a standard by an independent organization. In contrast, the network connection between the gateway host device and the bank host device as well as between the gateway host device and the end-customer host device is assumed to the untrusted and unreliable, because the gateway host device is assumed to be operated by a third party that has no access to a financial network.

In a certain application the end-customer host devices are postage meters and the gateway host device is provided by a postage provider. In another embodiment the gateway host device is set-up in such a way that it securely notifies one or more tax or customs authorities about the performed transfers of funds or goods. The notification policy follows the relevant legal laws and regulations. The notifying messages are end-to-end secured in the same way as the communication between the gateway host device and the bank host device.

The security module may further comprise fund transfer modules for exchanging funds between an end-customer's account at the gateway host device and his account at a bank host device and/or end-customer host device. Thus, all services needed to exchange funds are provided by the security module. Preferably such modules are implemented as software components of the security module's software architecture.

To provide a high level of protection against manipulation interacting protocol stacks and security critical application control are encapsulated within the security module according to another preferred embodiment.

The invention relates further to a method for exchanging electronics, services, data and/or funds between host devices of an account management system which comprises the steps of:

requesting a host device to process account data of a customer account stored in said host device,
generating a check code by a management module of a security device of said host device using account data of said customer account, and
verifying said customer account using said check code before processing the account data of said customer account.

In case of a requested fund transfer from an end-customer host device to a gateway host device the end-customer's credit at the end-customer host device is decreased before the end-customer's credit at the gateway host device is increased. Similarly, in case of a requested fund transfer from a gateway host device to an end-customer host device the end-customer's credit at the gateway host device is decreased before the end-customer's credit at the end-customer host device in increased. Further, the steps of the protocol for fund transfer are provided such that the sum of credits in the end-customer host device and the gateway host device before the start and after termination of the protocol execution are equal. Preferably, at any interim state of the protocol the sum of credits in the end-customer host device and the gateway host device equals the sum of credits in the end-customer host device and the gateway host device at the start of the protocol. Such an interim state could be misused by the end-customer to abort the transaction deliberately in order to increase his or her overall amount of credit.

The invention relates also to a computer program product as claimed in claim 19 comprising program code means for causing a computer to perform the method as described above.

It should be noted that the host device as claimed in claim 12, the account management system as claimed in claim 14, the method as claimed in claim 15 and the computer program product as claimed in claim 19 can be developed further and can have further embodiments which are identical or similar to the embodiments of the security module described above and claimed in the dependent claims of claim 1.

The invention will now be explained in more detail with reference to the drawings, in which

Fig. 1 shows the support chain for a known electronic payment system,

Figs. 2A-2C show different applications of an account management system according to the invention,

Fig. 3 shows a block diagram of an account management system according to the invention,

Fig. 4 shows a block diagram of an end-customer host device,

Fig. 5 shows a block diagram of a gateway host device,

Fig. 6 shows a block diagram of a bank host device,

Fig. 7 shows an overview of a funds transfer protocol,

Fig. 8A-8C show a detailed funds transfer protocol,

Fig. 9 shows wireless payment by WAP cell phone,

Fig. 10 illustrates an extension to staged electronic payment,

Fig. 11 shows an application of customer loyalty systems, and

Fig. 12 shows the sale of electronic tickets for public and private transport.

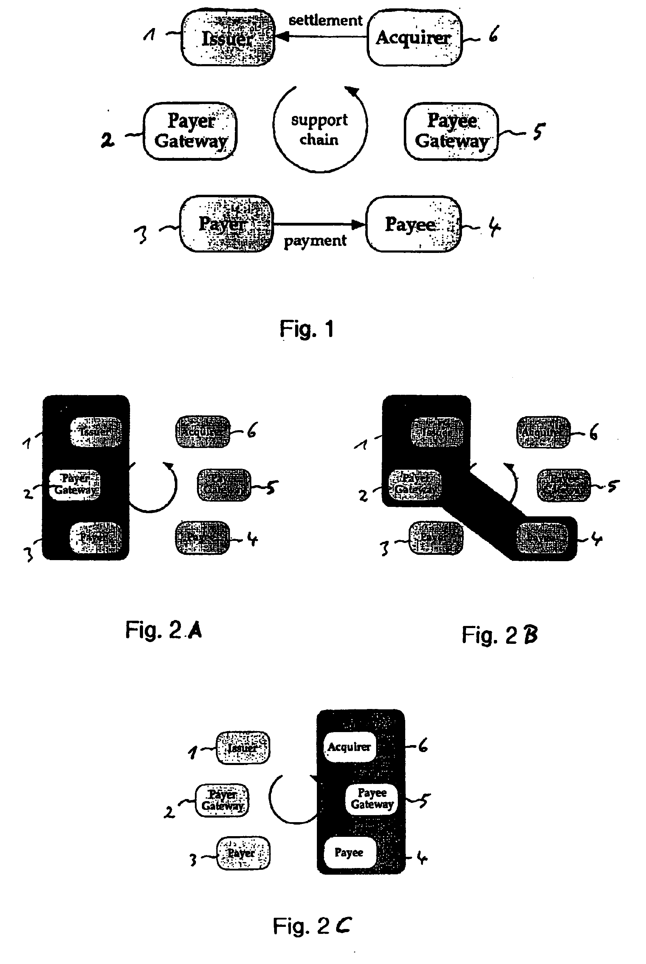

In Fig. 1 an electronic payment system in a broad perspective is shown. Electronic payment occurs if a payer 3 purchases some goods or services from a payee 4 (or merchant) and pays for them by money in electronic form, i.e. electronic money. Payer 3 and payee 4 can interact in several ways to perform the payment. The payee 4 may provide a point-of-sale terminal (POS), a central WWW storefront, or a distributed storefront, where upon payment the payer's equipment outputs the desired goods or services right at the payer's ends, for example, Pay-TV decoders.

Electronic payments require a support chain connecting the payer's bank 1 (issuer) via the payer 3 and the payee 4 right up to the payee's bank 6 (acquirer) . Altogether there are six logical links in this support chain of electronic payments (see list below) and a stand-by arbiter who is authorised and capable to resolve disputes related to electronic payments.

The electronic payment system shown in Fig. 1 comprises the following elements:

- Issuer 1: Typically a bank that provides electronic money that can be used for payments. The issuer 1 provides electronic money in exchange for real money.
- Payer Gateway 2: Either a bank or a third party having the technical infrastructure to provide electronic money, e.g., over the Internet.
- Payer 3: Any individual or corporate entity that wants to purchase goods or services for electronic money.
- Payee 4 (Merchant): Any individual or corporate entity that sells goods or services for electronic money.
- Payee Gateway 5: Either a bank or third party having the technical infrastructure to receive and acknowledge amounts of electronic payments from payees 4 who want to deposit these amounts into their bank accounts.
- Acquirer 6: Typically a bank that accepts electronic money or equivalents to be deposited into customer's bank accounts.
- Arbiter: A bank or third party that is authorised and capable to settle disputes related to electronic payments.

As a result of an electronic payment, real money is moved from the issuer 1 to the acquirer 6. One interaction between members of the support chain is the electronic payment itself. The last interaction in the support chain is a settlement between the issuer 1 and the acquirer 6 over a financial network. What other steps are required and what happens during the final settlement all depends very much on the particular business model into which the electronic payment is embedded.

An important classification of business models for electronic payments is by when the issuer 1 takes away the value from the payer 3 relative to when the payer finishes the electronic payment:

- Pre-paid: The issuer 1 takes the value from the payer 3 before providing electronic money in return and thereby before the electronic payment can begin let alone be finished. This is a cash-like business model. A typical example is electronic cash.
- Pay-later: The payer 3 can perform an electronic payment, and only afterwards does the issuer 1 take the corresponding value away from the payer 3, for example, when the payment is settled between the issuer 1 and the acquirer 6. This is an accountbased business model. Typical examples are payments by credit card, debit card or electronic check.
- Pay-now: A special case of the pay-later model is if the issuer 1 takes the value from the payer 3 only shortly after the electronic payment is finished. A typical example are payments by debit card.

The native task of the payer gateway 2 is to store and forward electronic money from a payer's bank account at the issuer 1 to the payer's device 3 (end-customer device) . Likewise, the native task of the payee gateway 5 is to store and forward electronic money or an equivalent (such as payment authorisations for credit card payments) from the payee's infrastructure back to the acquirer 6.

A payer gateway 2 connects wired or wireless payer devices 3 to the commercial bank account system at the issuer 1. In doing this, the payer gateway 2 can add value to the customer's bank accounts at the issuer 1 in several ways by

(1) providing more flexible account management and wider account access than the issuer 1 does.
(2) offering lower transaction fees than the issuer 1 does.
(3) integrating with innovative services supported by end-customer devices 3, such as multi-purpose electronic wallets, cell-phones, organisers, etc. The end-customer devices 3 may be available through the provider of the payer gateway 2 or a third party.
(4) enhancing the security of innovative services, and thereby enhancing their acceptability to financial institutions, merchants and potential regulators of such services.

These features are of particular interest if payer gateways 2 are to be operated by entrepreneurs, in particular not by banks or other institutions that are connected to the. financial networks. Such entrepreneurs can be internet service providers (ISPs) striving to become content providers or wireless application service providers (ASPs). Such entrepreneurs are facing a critical security issue because neither the payer gateway 2 nor its connection to the bank host is trusted.

A payee gateway 5 connects the payee infrastructure to commercial bank account systems at the acquirer 6. In doing this, a payee gateway 5 can add value to the payee's bank accounts at the acquirer 6 in several ways, for example, by

(1) providing more flexible account management and access than the acquirer 6 can.
(2) offering lower transaction fees than the acquirer 6 does.
(3) integrating with innovative services supported by merchant devices 4 and infra-structures, such as vending machines or automatic teller machines responding to cell-phones, etc. The merchant devices 4 may be available through the provider of the payee gateway 5 or a third party.
(4) enhancing the security of innovative services, and thereby enhancing their acceptability to .financial institutions, payers, potential regulators of such services or to the tax authorities.

These features are of particular interest if payee gateways 5 are to be operated by entrepreneurs, in particular not by banks or other institutions that are connected to the financial networks. Such entrepreneurs can be internet service providers (ISPs) striving to become content providers with an electronic bill payment option or wireless application service providers (ASPs) . Such entrepreneurs are facing a critical security issue because neither the payee gateway 5 nor its connection to the bank host is trusted.

There are a number of applications that consumers can pre-pay for by using end-customer hosts of various form factors.

- Electronic Wallet: The end-customer host is capable to connect online to some merchant facility in order to engage in a payment protocol.
- Recharging Facility: The end-customer host can be used to recharge the customer's phone cards or any other cash cards by using special recharging equipment.
- Secure Document Printer: The end-customer host connects to, or is, a regular PC with desktop printer. The end-customer host can print out various sorts of secure documents such as money orders, cashier checks, traveller checks, rebate checks, loan checks, tickets for airlines, trains, cruises, or other transportation, toll passes, tickets for events such as concert, theatre, opera, football, baseball, etc., retail stamps, licences for hunting, fishing or driving, rental car voucher or grocery voucher, gift certificates, etc.

- Pay-TV Decoder: The end-customer host connects to, or plugs into, a TV receiver or satellite receiver. For each portion of decoded data, a small amount is deducted from the end-customer's credit.

Any pre-payment business model (including the staged payment model) should satisfy the following security requirements:

- Availability: the payer 3 should obtain all services in the negotiated quality, if he has paid for it before.
- Integrity (payer 3): the payer 3 should not obtain services for which he has not paid before. This requirement is imposed by the payee 4, the issuer 1, the acquirer 6 and in case of regulated services such as mail delivery also by the regulating authorities. In case of staged payment, this requirement includes that the payer 3 cannot obtain tickets for services he has not paid for in advance.
- Integrity (payee 4): the payee 4 should not deposit payments into his account at the payee gateway 5 or at the acquirer 6 for goods or services he has not provided. In particular, it should not be possible for the payee 6 to deposit the same payment twice into his bank account.

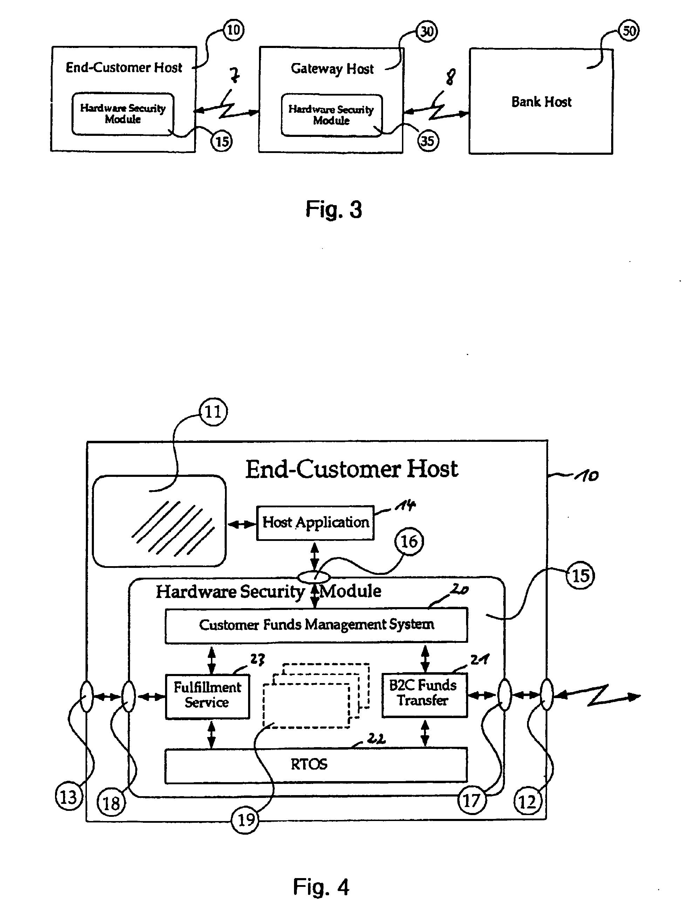

There are additional requirements, in particular on confidentiality and privacy, which may or may not be imposed.
Almost all of today's payer and payee gateways 2, 5 are operated by some bank or credit card company. As such, the payer and payee gateways 2, 5 are connected to a trusted financial network and they are operated in a friendly environment - at least from the point of view of the financial industry. In order to introduce new electronic services rapidly, third party entrepreneurs should be enabled to develop and deploy their own payer and payee gateways 2, 5, which will be customised to their particular kind of electronic service and business model. In most cases, third party operated payer and payee gateways 2, 5 will have to be certified or approved by some financial institution, potential regulators of the particular electronic service provided and/or by tax authorities. Ultra Secure Account Management is an enabling technology for entrepreneurs who are introducing electronic services and payer or payee gateways 2, 5 to charge their customers for these services.
Ultra Secure Account Management should be adopted by gateway hosts that are operated in hostile environments and connect two secure end points over untrusted networks; the issuer's bank host and a secure end-customer host such as an electronic wallet. The core component of ultra secure account management is a hardware security module that hosts the stacks of payment protocols that are used to serve both end-points, guarantees strong integrity of all customer accounts, optionally guarantees strong confidentiality of all customer accounts, and ensures safe roll-back mechanisms in case of aborted funds transfer. These integrity, authentication and confidentiality features are guaranteed even if the gateway host is operated in a most hostile environment where the operating system superuser and the database management system administrator collaborate and launch a sophisticated attack on the customer account database of the gateway host.
In terms of the ISO-OSI model, ultra secure account management means account integrity and optional account confidentiality as well as message authentication and optional message confidentiality at application layer. The ultra secure account management is based on the tamper resistance of the hardware security module employed by the gateway host. This way, most of the risk analysis necessary in conventional account management systems is reduced to a proper evaluation of the hardware security module. Since hardware security modules are probably orders of magnitude less complex than the whole gateway host (hardware, software, procedures, site security, personnel security, etc.) it is probably much cheaper and faster to get an ultra secure account management system approved by banking institutions, regulating bodies and/or tax authorities than a traditional account management system.
Figures 2A-2C show different applications of an electronic payment system in an offline pre-paid business model. In Fig. 2A an ultra secure account management system is implemented at the payer gateway 2 which interconnects it with the issuer's bank host device 1 on the one hand and the payer's end-customer device 3 on the other hand. In an online pre-paid business model, the same proposal can be used to secure online payment transactions where the payer gateway 2 connects with the issuer's bank host device 1 on the one hand and the payee 4 on the other hand, as shown in Fig. 2B. Much of what is said in this section carries over analogously to the payee gateway 5 and its interconnections with the acquirer's bank host device 6 on the one hand and the payee 4 on the other hand, as shown in Fig. 2C.
The design of an ultra secure account management system is presented in Figure 3. The bank host 50 represents any bank account data center, typically a main frame based system. The gateway host 30 is a data center at some third party vendor who offers some electronic goods or services to his customers. The gateway host 30 connects to the bank host 50 by any communication means 8 the bank host 50 supports; typically a frame relay connection, or leased phone line. The end-customer host 10 is a computer or computing device of the end-customer. It connects to the gateway host 30 through some communication means 7 that is convenient for the end-customer to use; typically by phone line or wireless Internet connection.

The bank host 50 provides all standard banking functionality, in particular funds transfer functionality with other bank hosts. The gateway host 30 provides two payment interfaces. A front interface for connecting with the end-customer host 10 and a back interface for connecting with the bank host 50. The front interface allows to transfer electronic money to the end-customer host 10 and to accept refunds from it. One or more online or offline electronic payment protocols can be supported. The back interface allows to obtain electronic money from the bank host 50 and to transfer refunds back to the bank host 50. The gateway host 30 supports any existing - usually mainframe based - interbanking (B2B) payment protocols such as electronic funds transfer. Other examples include the Banking Internet Payment Standard (BIPS) by the Financial Services Technology Consortium (FSTC) and Open Financial Exchange (OFX) by CheckFree, Intuit and Microsoft.

The gateway host 30 provides a database system that is capable to manage the accounts of all end-customers who connect to the gateway host 30 by their end-customer devices.

In principle, each provider in an electronic payment infrastructure has a different view on what system components, procedures, and staff should be trusted or not. The following proposal adopts the point of view of the banking industry and to a certain extent that of government agencies such as tax authorities or regulating bodies. This banking trust model is outlined below. Ultra secure account management is an enabling technology that adopts the banking trust model and helps to get electronic payment infra-structures approved faster by the banking industry.

Bank hosts 50 are trusted entirely and so are the financial networks connecting them.

The gateway host 30 is not trusted except for a hardware security module embedded into or attached to it. This hardware security module can be an internal PCI crypto coprocessor, e. g., by IBM, or an external crypto coprocessor, e. g., by Encipher or Chrysalis, etc. The hardware security module is assumed to be certified according to FIPS 140-1/2, Common Criteria or other standard by some independent accredited lab.

The purpose of using a hardware security module inside the gateway host 30 is to thwart attacks even by knowledgeable and sophisticated inside attackers, such as a Unix superuser or a database system administrator. The network connection 8 between the gateway host 30 and the bank host 50 is assumed to be untrusted and unreliable, because the gateway host 30 is assumed to be operated by a third party that has no access to a financial network.

The end-customer host 10 is not trusted except for a hardware security module embedded into it. This hardware security module can be an internal crypto processor such as the i-Button by Dallas Semiconductors, a smart card, or any off-the-shelf or proprietary device small and powerful enough to meet the convenience requirements of end-customers and the security requirements of the respective banking institutions and government agencies. The hardware security device is assumed to be certified according to FIPS 140-1/2, Common Criteria or other standard by some independent accredited lab.

The purpose of using a hardware security module inside the end-customer device is to thwart attacks even by knowledgeable and sophisticated users, who are willing to spend some money on cracking an end-customer device to afterwards get some free service. The connection 7 between the end-customer host 10 and the gateway host 30 is not trusted because it is over a public network, such as the Internet, wireless or telephone network.

The security requirements described above impose the following communication security requirements on an ultra secure account management system operated by the gateway host 30.

Funds must not be lost under any circumstances. If the communication line breaks between the bank host 50 and the gateway host 30 or between the gateway host 30 and the end-customer host 10 , the payment protocols must ensure that any transaction is safely rolled back into its initial state and all funds remain where they were before. If the database management system crashes there must be robust enough backup mechanisms in place to precisely recover the previous state of the database.

The account management system must ensure end-to-end authentication from the bank host 50 right through to the hardware security module of the end-customer host 10 and vice versa for refunds. This requirement implies replay prevention, which is a way of misrepresent someone unauthorised as an authorised user.

Funds must not be manipulated. The account management system must ensure that end-customers never gain more funds than what they have got into their bank account at the bank host 50. Clearly, the end-customer host 10 must store all funds downloaded off of the gateway host 30 inside the hardware security module of the end-customer host 10. Likewise, the gateway host 30 must protect its account database by means of its hardware security device in such a way that even if the database system administrator, the network administrator and the operating system administrator of the gateway host 30 collude in a sophisticated attack, it must be infeasible to manipulate funds in an undetectable way.

The architecture of the end-customer host 10 is shown in Fig. 4. The end-customer host 10 comprises a hardware security module 15. The end-customer host 10 can have three types of interfaces:

- a human user interface 11, e. g., a textual, graphical or voice based user interface. It can also be a cable interface to some other appliance of the end-user, which provides a more convenient or versatile human user interface.

- an uplink interface 12 which connects to a downlink interface of the gateway host 30. It can be a TCP/IP connection over ethernet or modem X.25 or over a wireless channel.
- a fulfilment interface 13, which provides the demanded service to the end-customer. It can be a standard serial, USB, or parallel port connecting to some printing facilities to print out e-tickets or electronic stamps. It can be a USB or FireWire interface for decoding and decrypting audio-or video streams. It can be an infrared interface to connect to POS terminals or ATMs. It can be a wireless interface to connect to vending machines, etc.

The hardware security module 15 can have three analogous types of interfaces:

- an application layer interface 16 which connects to the human user interface 11 of the end-customer host 10 or some host application 14 running on the gateway host 30. Through this interface, customer commands feed into the hardware security module and responses are fed back to the customer.
- a transport layer communication interface 17 which connects to a downlink interface of the gateway host 30. Through this interface, funds can be exchanged via the gateway host with an account at a real bank.
- a fulfilment interface 18 which connects to the fulfilment interface 13 of the end-customer host 10. Through this interface, the hardware security device provides through a fulfillment service module 23 electronic goods or services for funds stored in the end-customer host 10.

The software architecture of the hardware security module 15 comprises at least four software components:

- Customer Funds Management System 20 is an application software module that processes all input from and output to the end-customer human user interface. It also keeps end-customer funds within secure memory registers provided by the real-time operating system 22. To handle these tasks, it uses a particular B2C funds transfer module 21 and it may use additional software components 19 such as a module to ensure the integrity and completeness of all audit and transaction data.
- B2C Funds Transfer Module 21 provides all services needed to download funds from an end-customer's bank account into the hardware security module 15 or to upload funds back into an end-customer's bank account.
- Additional Software Components 19 provide extra e-products or e-services such as producing electronic tickets, electronic money orders, electronic traveller checks, electronic stamps, GPS location tracker, video or audio stream decryption facilities, electronic POS payment, etc.
- Real Time Operating System (RTOS) 22 provides basic services such as:

  - general and cryptographic computing power optionally accelerated by special cryptographic coprocessors,
  - cryptographic boot loader enforcing that only correctly signed executables or DLLs are executed,
  - flash memory and volatile memory management,
  - real-time clock.

Any software drivers for extra sensors or actors that the additional software components may need, e. g., GPS receivers, USB, Firewire, ATM, etc.

The architecture of the gateway host 30 is depicted in Fig. 4. The gateway host 30 comprises a human user interface, general computing means, persistent storage means 34 for, inter alia, an account database, a database management system (DBMS) 31, a hardware security module 35 and two types of interfaces:

- an uplink interface 32 which connects to the bank host 50 and
- a downlink interface 33 which connects to the uplink interface 12 of the end-customer host 10.

The hardware security module 35 has four types of interfaces:

- an application layer interface 36 through which the hardware security module has access to the database management system(s) 31 of the gateway host 30, for example to output application data or its log stream;
- an application layer interface 39 by which the operator of the gateway host 30 can maintain the hardware security module 35;
- a transport layer uplink interface 37 which connects to the uplink interface 32 of the gateway host 30. Through this interface funds can be exchanged with an account at bank host 50;
- a transport layer downlink interface 38 which connects to the downlink interface 33 of the the gateway host 30.

The software architecture of the hardware security module 35 comprises at least the following 5 software components:

- Ultra Secure Account Management System (USAMS) 40 is an application software module that processes all input from and output to the gateway host 30. It also serves requests coming in through either a B2C Funds transfer module 41 or a B2B Funds transfer module 43. To handle these requests, it also uses a particular Directory Management module 42 and it may use services of the underlying real-time operating system 44 of the hardware security module 35. Additionally it secures the integrity and completeness of all audit and transaction data.
- B2B Funds Transfer Module 41 provides all services needed to exchange funds between an end-customer's account at the gateway host 30 and his account at the bank host 50.
- Directory Manager 42 provides extra services needed to enforce the integrity of data that is held at the gateway host 30 outside of its hardware security module 35. In addition, the Directory Manager 42 can enforce strong confidentiality of the external customer account database.
- B2C Funds Transfer Module 43 provides all services needed to exchange funds between an end-customer's account at the gateway host 30 and the end-customer host 10.
- Real-time operating system (RTOS) 44 provides basic services such as:

  - general and cryptographic computing power optionally accelerated by special cryptographic coprocessors,
  - cryptographic boot loader enforcing that only correctly signed executables or DLLs are executed,
  - flash memory and volatile memory management,
  - real-time clock.

The hardware security module 35 of the gateway host 30 comprises an ultra secure account management system (40) that can manage large customer account databases such that the integrity and/or confidentiality of all customer accounts is strongly enforced:

(1) Even against the most sophisticated and privileged inside attacker such as a collusion of the administrator of the DBMS and the super user of the underlying operating system of the gateway host 30. It should be noted that a database administrator has read and write access to all customer accounts, and a super user of the operating system has the power to even patch the DBMS kernel.

(2) Although the database management system (DBMS) and the hard disks on which the databases reside can be located in a hostile environment such as the gateway host 30 or at a remote data center of a subcontractor or even distributed over a number of hosts on the Internet.

The concept of ultra secure account management is explained by example of a very simple account database. The ultra secure account management system 40 maintains the customer account database (CAD ) by using the DBMS outside the hardware security module 35 because the customer database is potentially larger than what a hardware security module can accommodate. As a companion to the external customer account database, the ultra secure account management system 40 maintains an internal integrity maintaining directory (IMD) by using the Directory Management module within the hardware security module 35. The integrity maintaining directory is a table of one row for each customer account of the external customer account database and two columns. The first column takes an account number, the second column takes an integrity check code (ICC).

The internal integrity maintaining directory mirrors the external customer account database row by row, i. e., for each row of the customer account number in the external customer account database, there is a row in the internal integrity maintaining directory.

In practice the external customer account database consists of one table of three columns and potentially thousands of rows. Each row holds a customer account. The first column takes a customer account number, the second column takes a customer ID, and the third column takes an account value as shown in the following table, providing an example:

| Customer Account Database | | | Integrity Maintaining Directory | |
|---|---|---|---|---|
| F1 | Field 2 | Field 3 | F1 | Field 2 |
| # | Customer name | Account value | # | Integrity Check Code |
| 0001 | Smith | 126,490.58 | 0001 | 4fab 1c43 78a3 350f c598 dd7e 3940 4a5b 721a 7429 |
| 0002 | Miller | 2,010,426.87 | 0002 | 9435 6a43 ef21 9691 fba0 |

(continued)

| Customer Account Database | | | Integrity Maintaining Directory | |
|---|---|---|---|---|
| F1 | Field 2 | Field 3 | F1 | Field 2 |
| | | | | 535b b670 783a 5601 350c |
| 0003 | Dickson | 36,513.25 | 0003 | 4580 0959 b9c0 394d 0945 0435 b3c1 4e5a 394f 95be |

It is crucial that the integrity maintaining directory be held in protected memory inside the hardware security module 35. Consider the following light implementation of customer account management 40 where the integrity maintaining directory is held instead in the external customer account database. For example, the external customer account database could be extended by an additional column holding the ICC of the respective customer account. An inside attacker, such as the DBMS administrator 42 cannot produce valid ICCs for arbitrary account data, but he could "replay" previous account statuses including valid ICCs into the customer account database - preferably statuses with a higher account value than the actual one. This "replay" attack goes undetected because the light implementation of the customer account management 40 has no way of knowing if the data in an account is actual.

Whenever the ultra secure account management system 40 updates customer account n (first field),

(1) it writes the new customer name $<customerName_n>$ into the second field of row and the new account value $<accountValue_n>$ into the third field of the same row.

(2) Next, it computes the corresponding integrity check code $<ICC_n>$ over the account number, the customer name and the account value. The integrity check code can be a hash value, MAC or a digital signature.

(3) Finally, it writes the integrity check code $<ICC_n>$ into the second field of account of the integrity maintaining directory.

Whenever the ultra secure account management system 40 reads customer account n first field) from the external customer account database,

(1) it reads $<customerName_n>$ from the second field, $<accountValue_n>$ from the third field and $<ICC_n>$ from the fourth field.

(2) Before processing these data, the account management system verifies if $ICC_n = HMAC(n \mid <customerName_n> \mid <accountValue_n>)$.

(3) If this check fails, then $<customerName_n>$ or $<accountValue_n>$ or both have been modified, since they have been last updated by the account management system. In this case, the account management system launches a recovery procedure that analyses the current state of the customer account database taking into account a number of evidences such as backup tapes, audit trails of the customer account database and the integrity maintaining directory.

(4) Only if the check in step (2) succeeds, the ultra secure account management system will process a request on the customer account data.

The problem of recovering from corruption of the customer account data-base of the gateway host 30 is an availability problem. As such it cannot be solved by cryptographic techniques. It can only be solved by proper security policies and practices. They include the training and awareness of employees, sound backup, logging and audit procedures, etc. These measures together can help to provide enough evidence for recovering the customer account database from a corrupted state. It is important to note that the ultra secure account management system 40 enforces that only uncorrupted account data is processed. It also helps to identify which accounts have been corrupted, but it cannot accounts from being corrupted, either accidentally or by an attacker. Ultra secure account management re-uses known recovery mechanisms that a data center must have in place anyway.

It is recommended to use a message authentication code as the integrity check. For example, HMAC based upon SHA-1 is a good choice. Although in certain cases, a simple hash value may be sufficient, computing a message authentication code is almost as efficient to compute and safer.

If the hardware security module 35 hosts no other software than the bare minimum of what is required for the account management 40 and supporting modules 41-44 then it suffices to use a simple hash value, e. g. , SHA-1, as integrity check code. However, if additional custom software is loaded into the hardware security module, it is safer to use an authentication code as integrity check code. It avoids the extra risk of malicious custom software inside the hardware security module, which might manipulate the integrity maintaining directory and produce proper hash values for the manipulated data in order to cover up the manipulation.

If the integrity maintaining directory shall or must be inspected and verified by other entities than the hardware security module 35 of the gateway host 30, then a digital signature mechanism is most appropriate. In this case, all the potentially verifying entities can share the verifying key without putting the signing key of the account management system 40 at risk.

The concept of ultra secure account management at the gateway host 30 is based on hardware security modules. However, a hardware security module has limited computing and storage capabilities and therefore is a potential bottleneck. For the hardware security module of the gateway host (30), the cryptographic coprocessor 4758-002/023 by IBM could be considered. This coprocessor is a natural choice because it holds a FIPS 140-1 overall level 4/3 certificate, and is freely programmable. It comes with 4 MB of Flash RAM, of which 3 MB are usable by custom application software. The Flash RAM can optionally be encrypted. The internal encryption key resides in battery-backed RAM, which is effectively zeroized in case someone attempts to tamper the cryptographic coprocessor.

An implementation of the ultra secure account management system 40 in the above sections requires per account 4 byte for the account number and 20 byte (160 bit) for the integrity check code. The IBM 4758 model 002 achieves an internal signing performance of 71 RSA digital signature (1024 bit modulus) per second. In order to support larger account databases or to achieve a higher transaction rate per second, additional cryptographic co-coprocessors must be used.

The ultra secure account management system 40 above scales well when static memory balancing is used. That is, the hardware security module 35 is implemented by a number of actual hardware security modules, each maintaining the integrity of a pre-defined subset of customer accounts. The Integrity Maintaining Directory is logically partitioned into pieces, and each piece is kept in protected memory of one actual hardware security module.

Incoming requests from end-customers can be routed in different ways: An incoming request can be routed to the right actual hardware security module by the application software of the gateway host 30 if it is aware of the end-customer's identity and account number. Otherwise, each request could be broadcast to all actual hardware security modules, leaving them to make a distributed decision who will process the request. The request is processed only by the actual hardware security module into which range of customer accounts it falls, while all other actual hardware modules ignore the request.

In order to keep key management simple, all actual hardware security modules should share the same authenticating key pair in their secure communication with the end-customer host 10 and the bank host 50. It should be noted that they can still use individual authentication keys to produce and verify their internal Integrity Check Codes.

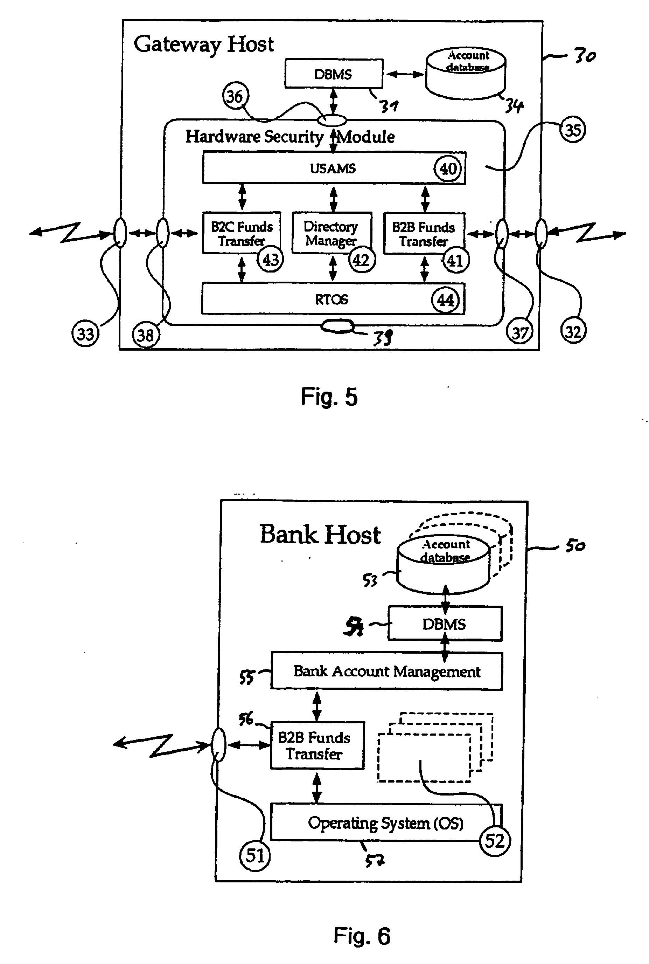

The architecture of the bank host 50 is depicted in Fig. 6. The bank host 50 comprises a bank account management system 55, an operating system 57, a data-base management system (DBMS) 54 for an account database 53, a software module 56 for B2B funds transfer, optional other software modules 52 and at least one type of interface 51 through which the bank host can transfer funds with external account management systems, which interface 51 is a downlink interface which connects to the uplink interface 32 of the gateway host 30.

In the following a generic funds transfer protocol is presented that can be used for any ultra secure account management system 40, regardless how it is applied in a payment support chain as shown in Figs. 2A-2C. To illustrate the following protocol, application A shown in Figure 2A is used.

Ultra Secure Account Management must provide reliable funds transfer between the gateway host 30 and the bank host 50 on the one hand and the end-customer host 10 on the other hand. These transfers are typically handled over unreliable connections such as private phone lines, wireless phone connections, or the Internet. Ultra Secure Account Management must make sure that

- end-customer funds are handled with the highest degree of integrity, but
- end-customers or administrators of the gateway host 30 cannot deliberately abort funds transfers in order to increase their funds in unauthorised ways.

Since gateway hosts may serve many connections at the same time they need to keep a cache of critical data of all open connections at all times in order to properly roll back transactions that have been aborted. If the gateway host allows many concurrent connections then the memory requirements on the hardware security device of the gateway host can be significant. A protocol will be presented, that allows the hardware security module to keep track and control of all open funds transfers, yet uses the untrusted databases of the gateway host in order to minimise the memory requirements of the hardware security module itself.

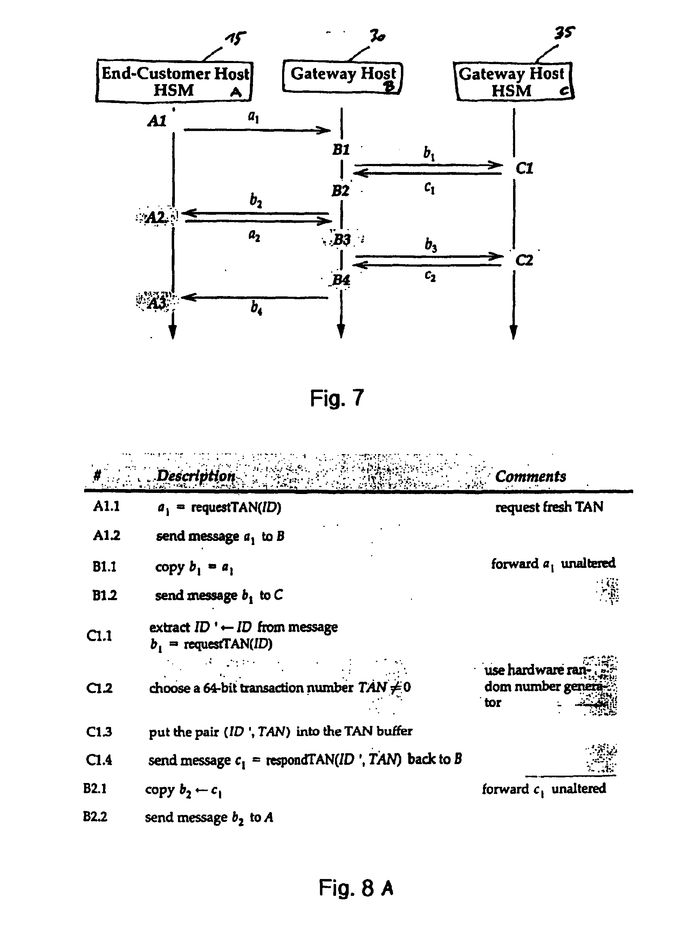

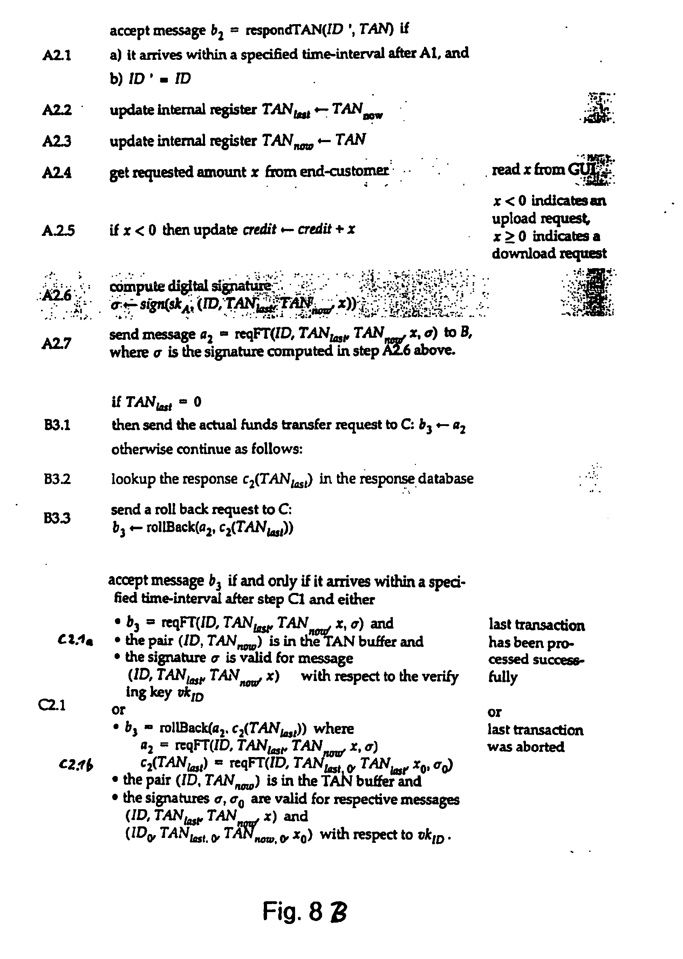

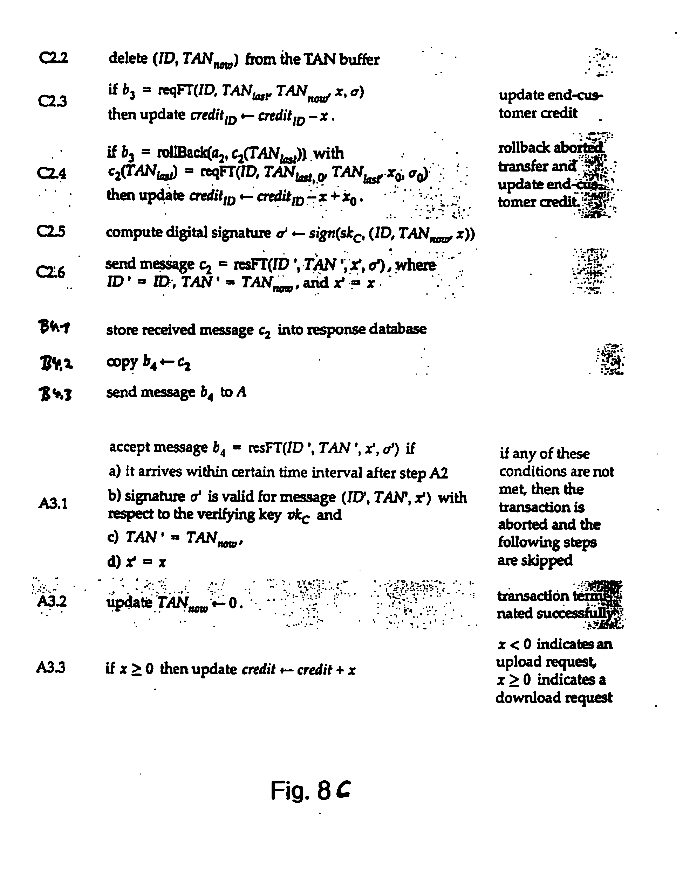

The following protocol which will be explained with reference to Figs. 7 and 8A-8C handles funds transfers in either direction between the hardware security module A of the end-customer host 10 and the hardware security module C of the gateway host. Any funds transfer is initiated by A.

The protocol structure is shown in Fig. 7. The end-customer host 10 provides only the user interface for the end-customer, but does not take part in the actual communication protocol. Hence, Fig. 7 shows three participants:

- the hardware security module (HSM) A of the end-customer host 10,
- the gateway host B including a database system and
- the hardware security module (HSM) C of the gateway host B.

During the first stage (computation steps A1, B1, C1, B2, A2), A and C agree on a fresh transaction number, which will prevent replay later on. The second stage (computation steps A2 (continued) , B3, C2, B4, A3) serves either to perform the requested funds transfer completely, or in case the last request was unsuccessful, to roll-back into the state before the protocol was started and then to perform the actual request.

The hardware security module A of the end-customer host 10 has a set of internal parameters:

(1) a unique identifier ID,
(2) a unique identifier of the current transaction number $TAN_{now}$,
(3) a unique identifier of the last transaction number $TAN_{last}$, which is initially set to zero,
(4) an amount that represents the credit stored by A,
(5) a signing key $sk_{ID}$,
(6) a public verifying key $vk_C$ of the hardware security module C of the gateway host 30. This public verifying key is assumed to be imported in an authentic way, for example, during manufacturing of the hardware security module A.

The Gateway Host B runs

- an account database that holds an amount for each hardware security module A with unique identifier ID and
- a response database that holds all responses $c_2$ of B's hardware security module that are computed in response to funds transfer requests of any hardware security module A. The response to a request with transaction number TAN is denoted $c_{2,TAN}$.

The hardware security module C of the gateway host B has a number of internal registers:

(1) a TAN buffer, which contains the pairs of IDs and transaction numbers of all TAN requests that have neither timed-out nor have been successfully processed yet,
(2) its signing key $sk_c$,
(3) a public key directory of the verifying keys $vk_{ID}$ of the hardware security modules of all registered end-customers. This public key directory is assumed to be managed appropriately, in particular, only authenticated public keys are inserted. For example, verifying keys can be managed according to the X509 standard.

The following notation will be used in Figs. 8A-8C explaining a funds transfer protocol in detail. The signing keys $sk_{ID}$ and $sk_C$ can be used to compute digital signatures. The signing algorithm of a digital signature mechanism takes as input a signing key, e. g $sk_{ID}$, and a message m and returns as output a digital signature $\sigma$. The signing algorithm is denoted as follows:

$$\sigma \leftarrow \text{sign} (sk_{ID}, m) .$$

If the message is concatenated of several bitstrings $m_1, m_2, ..., m_n$, the full message is denoted $m = (m_1, m_2, ..., m_n)$.

The verifying keys $vk_{ID}$ and $vk_C$ are used to verify the digital signatures of hardware security module A identified by ID and C respectively. The verifying algorithm takes as input a verifying key, e. g. $vk_{ID}$, a message m and a signature $\sigma$ and returns as output a Boolean value accept. The verifying algorithm is denoted as follows:

$$\text{accept} \leftarrow \text{verify} (vk_{ID}, m, \sigma) .$$

If algorithm verify returns TRUE, then the signature $\sigma$ is said to be valid for message m with respect to verifying key $vk_{ID}$. Otherwise, it is said to be invalid.

The end-customer can request a funds transfer from his account at the gateway host down into his end-customer host 10. Such a funds download is specified by a positive amount x in computation step A2. The end-customer can also request a refund from his end-customer host 10 back to his customer account at the gateway host. Such a refund is specified by a negative amount x in computation step A2. In either case, there must be no interim state of the protocol where the sum of credits in the hardware security modules A and C exceeds the sum of their credits at the start of the protocol. Such an interim state could be misused by the end-customer to abort the transaction deliberately in order to increase his overall amount of credit. Therefore, the protocol ensures that in case of a download request (x≥0) the end-customer credit is first decreased at the hardware security module C (see step C2.3 in Fig. 8C) before it is increased at hardware security module A (see step A3.3 in Fig. 8C). In case of an upload request, the credit at hardware security module A is decreased (see step A2.5 in Fig. 8B) before the end-customer's credit at the hardware security module C is increased (see step C2.3 in Fig. 8C).

The hardware security module A initiates the protocol by requesting a fresh TAN (step A1.1) and sending it as message $a_1$ to the gateway host B (step A1.2). The gateway host B receives the message $a_1$, copies it to $b_1$ (step B1.1) and forwards it unaltered to its hardware security module C (step B1.2). The hardware security module C receives the message $b_1$ and extracts ID' therefrom (step C1.1). Thereafter it uses a hardware random number generator to choose a 64-bit transaction number TAN unequal to zero (step C1.2), puts the pair (ID', TAN) into the TAN buffer (step C1.3) and sends the message $c_1$ = respond TAN (ID', TAN) back to the gateway host B (step C1.4). The gateway host B receives the message $c_1$, copies it to $b_2$ (step B2.1) and forwards it unaltered to the hardware security module A (step B2.2).

The hardware security module A receives the message $b_2$ and accepts it if it arrives within a specified time-interval after step A1 and if ID' equals ID (step A2.1). Thereafter it updates the internal register $TAN_{last}$ with $TAN_{now}$ (step A2.2) and $TAN_{now}$ with TAN (step A2.3), reads the amount x from the end-customer (step A2.4) and updates credit with credit + x if an upload (x<0) is requested (step A2.5). A digital signature $\sigma \leftarrow$ sign $(sk_A, (ID, TAN_{last}, TAN_{now}, x))$ is computed (step A2.6) and a message $a_2$ = reqFT(ID, $TAN_{last}$, $TAN_{now}$, x, $\sigma$) is sent to the gateway host B (step A2.7).

The time interval following computation step A1 in which a response $b_2$ will be accepted must balance a number of parameters of a given system implementation. In general, the shorter this time-interval is, the smaller is the risk of being attacked. The longer it is, the more tolerant the system is against message delays due to network congestions, etc.

The gateway host B receives the message $b_2$. If $TAN_{last}$ equals zero it sends the actual funds transfer request to the hardware security module C (step B3.1), while otherwise it continues by looking up the response $c_2(TAN_{last})$ in the response database (step B3.2) and sending a roll back request $b_3$ to its hardware security module C (step B3.3).

The hardware security module C of the gateway host B receives the message $b_3$ and accepts it and only if it arrives within a specified time-interval after step C1 and either the last transaction has been processed successfully (step C2.1a) or the last transaction was aborted (step C2.1b). The pair (ID, $TAN_{now}$) is deleted from the TAN buffer (step C2.2). If the message $b_3$ = reqFT(ID, $TAN_{last}$, $TAN_{now}$, x, $\sigma$) then the end-customer credit $credit_{ID}$ is updated with $credit_{ID}$ - x (step C2.3). If alternatively the message $b_3$ = roll-Back($a_2$, $c_2(TAN_{last})$), where $c_2(TAN_{last})$ = reqFT(ID, $TAN_{last,0}$, $TAN_{last}$, $x_0$, $\sigma_0$), i.e. if the rollback has been aborted, then the end-customer credit $credit_{ID}$ is updated with $credit_{ID}$ - x + $x_0$. (step C2.4). Thereafter a digital signature $\sigma'$ = sign $(sk_C, (ID, TAN_{now}, x))$ is computed (step C2.5) and a message $c_2$ = resFT(ID', TAN', x', $\sigma'$), where ID' = ID, TAN' = $TAN_{now}$ and x' = x, is sent to the gateway host B (step C2.6).

The time interval following computation step C1 in which the response $b_3$ will be accepted must balance a number of parameters of a given system implementation as explained above. Moreover, the TAN buffer must be cleared on a regular basis from TANs that are not followed by valid funds transfer requests within the time-interval set.

The gateway host B receives the response $c_2$ from its hardware security module C, stores it into its response database (step A3.1), copies it into message $b_4$ (step A3.2) and sends the message $b_4$ to the hardware security module A.

The hardware security module A of the end-customer host 10 receives the message $b_4$ and accepts it if it arrives within a specified time-interval after step A2, if the signature $\sigma'$ is valid for message (ID, TAN', x') with respect to the verifying key $vk_C$, if TAN' equals TAN and if x' equals x (step A3.1). If any of these conditions is not met, then the transaction is aborted and the following steps are skipped. If all conditions are met, the transaction is terminated successfully by updating $TAN_{now}$ with zero (step A3.2) and updating credit with credit + x if x indicates a download request (x≥0) (step A3.3).

The time interval following computation step A2 in which a response $b_4$ will be accepted must balance a number of parameters of a given system implementation as explained above.

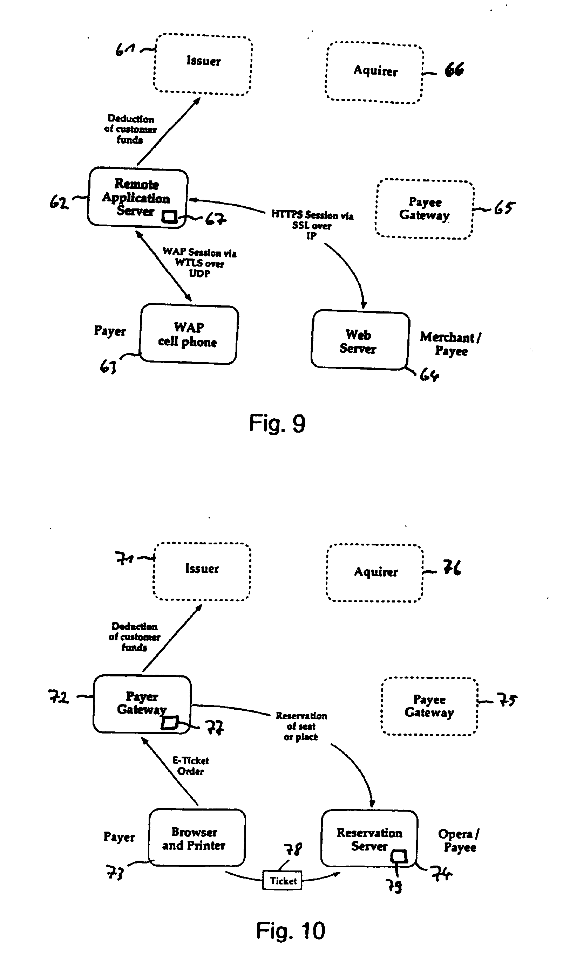

Figure 9 shows wireless payment by WAP cell phone. The wireless application protocol (WAP) is a standard by which WAP cell phones 63 connect to a remote application server 62 (RAS) in order to request some application related service. If the WAP cell phone 63 requests a payment service, the remote application server 62 connects to the payee 64 in order to transfer the intended funds from the payer's account to the merchant's data center.

Technically, such payment consists of two protocols:

(1) a payment request transmitted from the WAP cell phone 63 to the remote application server 62 over a WAP Session using WTLS (wireless transport layer security) and
(2) the payment protocol, which deducts the requested amount from the customer's account at the issuer 61 and transfers it over an HTTPS session using SSL to the respective merchant 64.

The first protocol authorizes the remote application server 62 to act on behalf of the payer 63 towards the issuer 61 and the merchant 64. The remote application server 62 can be seen as a protocol converter between WAP and HTTPS and other protocols between the issuer 61 and the payer gateway 61. The purpose of a security module 67 inside the remote application server 62 is to make sure that this protocol conversion is not corrupted and either recovers from broken connections successfully or rolls back all participants into their states before the last payment request.

In a more specific example, the merchant 64 sets up a web server inside vending machines, and customers can connect to these vending machines by their WAP cell phones 63.

Another application illustrates an extension to staged electronic payment in Figure 10 which refers to associating online services with electronic tickets. If payers 73 request electronic tickets 78 for a certain flight with some airline or tickets for some event at an opera house, movie theater, football stadium, etc. they are likely to make corresponding reservations of seats, etc. there is a two stage process:

(1) a ticket request is transmitted from the payer 73 to the payer gateway 72 and
(2) the payer gateway 72 deducts the respective amount from the customer's account at the issuer 71 and returns an electronic ticket to the payer 73. At the same time, the payer gateway 72 also walks the payer 73 through a reservation menu for the requested event.

It is important that the transaction (2) is performed either completely or not at all. It is not acceptable to the customer to pay the price, but either receive no ticket or end up without the requested reservation. On the other hand the event provider or airline will not accept that a ticket is granted to the payer or a reservation is made in the payer's name without proper payment. The purpose of a security module 77 inside the payer gateway 72 is to ensure that either all of the actions of step (2) are performed, or none

of them. In addition, it will log all requests, and recover from broken connections if possible or rolling back all participants into the state before the last request.

It is to be noted in this example that the ticket 78 can be instantiated in various ways. It can be a paper based ticket printed onto a label, plain paper or some secured stock. It can also be held by the payer 73 in electronic form, e.g., a re-usable chipcard which can be inserted into a chipcard reader at the ticket booth or a handheld device, which can-make an infrared or wireless connection to the ticket booth.

In this application, security devices 77, 79 are applied in the payer gateway 72 and in the reservation server 74. They guarantee the following:

(1) Payers 73 are charged only for the tickets they have ordered and the reservations they have made.
(2) Event organizers (payees) receive the funds for each ticket sold and each reservation made.
(3) All orders, reservations and payments are securely logged by the payer gateway 72 and by the reservation server 74. In case of dispute later on, the case can be settled by analysing the logstreams.
(4) In addition, the security devices 77, 79 can guarantee that no ticket is sold without making a proper reservation.

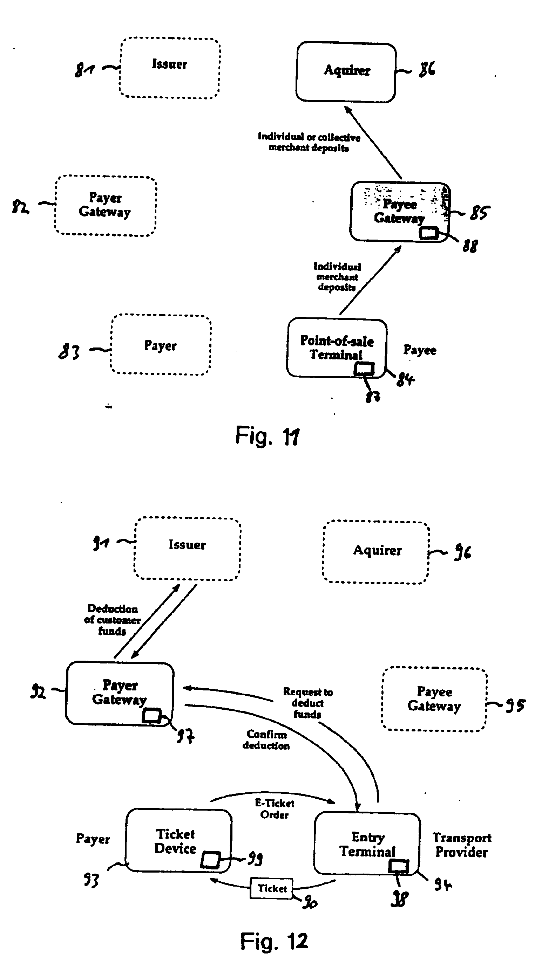

In Figure 11 an application of Customer Loyalty Systems is shown. Merchants of various sectors or public/private transport providers of a geographic region team up to run a customer loyalty program. They setup a payee gateway 85 in order to deposit all their revenues into their respective bank accounts at one or more acquirers 86. In order to keep track of the revenue generated by each customer, the payee gateway 85 runs customer accounts, which are updated each time a merchant deposits its revenue. This way, customers collect rebate or credit from purchases of a wide variety of goods and services.

In this application, security devices 87, 88 are applied in the payee gateway 85 and favourably also at the payee's point of sale terminal 84. The security device 88 at the payee gateway 85 securely manages a customer account database that reflects all revenue of a number of customers from a number of merchants. The security devices 87, 88 together guarantee the following:

(1) Each merchant's revenue is finally deposited into its proper account at the respective acquiring bank.
(2) The revenue generated by each customer is securely monitored and the customers are given respective rebates, credits, reduced interest rates, etc.

An ultra secure account management system can keep all account data confidential even against the prying eyes of the super user of the operating system or the data-base administrator of the gateway host, or both. Ultra secure account management systems achieve this feature by writing account data into the external database of the gateway host only in encrypted form. Typically, the ultra secure account management system is the only entity intended to ever decrypt the account data, so it is appropriate to use a symmetric encryption scheme, e.g., Triple DES or AES (Rijndal), etc.

The concept of ultra secure account management is to encapsulate interacting protocol stacks and security critical application control within a hardware security module. In order to extend the limited hardware resources of the hardware security module, resources of the gateway host can be employed in a way that supports end-to-end authentication and end-to-end integrity between the two end-points, connected by the gateway host.

It is clear that service availability cannot be enforced by the hardware security module alone if it relies upon resources of the gateway host. However, the hardware security module is an embedded system inside the gateway host and therefore it cannot guarantee service availability all by itself anyway. For example, it has no independent communication means to the world outside of the gateway host. In this sense, ultra secure account management is the most that can be expected in terms of security.

Ultra secure account management can be used to implement higher integrated services such as secure exchange management systems, where dealers and customer exchange digital goods for digital money. The ultra secure account management system can be used to enforce that either both parties get the agreed money or good, respectively, or neither one gets anything from the other. Here, either the payer gateway or the payee gateway host can serve as a trusted dealer, who is responsible to safely roll back exchange transactions that have got interrupted.

Applications of fair exchange come with the arrival of multimedia devices in customer homes. A multimedia device can be a dedicated device such as a video or DVD player, or it can be a PC running an MPEG decoder, or a browser for electronic books, etc. The customer's multimedia device station is supported by a multimedia provider, who can interoperate with (one or more) payer gateways of its customers. Through the payer gateway, the customer can buy the keys to unlock certain content from a multimedia stream broadcast by the multimedia provider, e.g., pay per view. Or the customer can order certain video or audio content, pay for it and receive it right away, e.g., video on demand. Infrequent purchases can be done online. If the payment model requires frequent payments of probably smaller amounts (micro payments similar to phone ticks), customers can pay offline. In this case they use their multimedia device also as a secure wallet into which they can download an amount of funds off of the payer gateway. The funds within the payer's multimedia device are consumed as the payer unlocks certain multimedia content.

In this application, security devices are applied in the payer gateway and in the server of the multimedia provider and optionally in the payer's multimedia device. The security devices together guarantee the following:

(1) Payers are charged only for the content they have received or viewed (consumed).
(2) Multimedia providers (payees) receive the funds for each piece of content delivered or viewed (consumed).
(3) All orders and deliveries are securely logged by the payer gateway and by the multimedia provider. Disputes will be settled after analysing the logstreams.

Still another application refers to the sale of electronic tickets for public and private transport as shown in Figure 12. In public transport, people want to ride in subways, buses or trains without making prior reservations. Passengers can switch subways, buses and trains, and sometimes the best available fare can be calculated only after the trip is completed. In this case, passengers can pay individual tickets for each leg of their trips and finally get a rebate if the whole trip costs less than the sum of its legs. Other pricing models such as seasons tickets can be supported as well.

Passengers use electronic ticket devices 93 that can either (a) download funds off of a payer gateway 92 or (b) authorize a payee to download a certain amount of funds for the passenger. Transport providers set up entry terminals 94 at all points where passengers can board subways, buses or trains. When a passenger passes an entry terminal 94, he must first get a ticket 90. In order to pay for the ticket 90, the ticket device 93 can either (a) download funds off of the payer gateway 92 in advance and then pay the entry terminal 94 directly over a wireless or infrared connection, or (b) authorize the entry terminal 94 to deduct the funds for the ticket from the passenger's account at the payer gateway 92.

In this application, security devices 97, 98, 99 are applied in the payer gateway 92, in the entry terminals 94 of the transport provider, and optionally in the payer's ticket device 93.

The security devices 97, 98, 99 together guarantee the following:

(1) Payer's are charged only for the trips they have made, and only the lowest fare at which the complete trip is available.
(2) Public/private transport providers (payees) receive the funds for each leg of a trip actually delivered.
(3) All ticket orders and deliveries and all trips actually made are securely logged by the payer gateway 92 and by the entry terminals 94. Disputes will be settled after analysing the logstreams.

If several transport providers run a network of transport services, they can also integrate a customer loyalty system as shown in Figure 11.

**Claims**

1. Security module for a host device of an account management system comprising:

    an interface for communicating and exchanging data with the host device,
    a management module for processing data and requests,
    a directory module for storing customer account specific check codes for customer accounts stored in the host device,
    a code generation means for generating a check code using account data of a customer account, and
    a verification means for verification of the check code to check if the account data of the corresponding customer account have been modified in case of a request to process account data of said customer account.

2. Security module according to claim 1,
    wherein the check code for a customer account is generated by said management module using the account number, the customer name and the account value of said customer account.

3. Security module according to claim 1 or 2,
    wherein the check code is a hash code, a message authentication code or a digital signature.

4. Security module according to any of the preceding claims, further comprising encryption and decryption means for encrypting data before exchanging it with the host device and for decrypting data received from the host device.

5. Security module according to any of the preceding claims,
    wherein the security module is encapsulated in tamper resistant or responsive hardware.

6. Security module according to any of the preceding claims,
    wherein the security module is implemented by a number of security sub-modules each storing a subset of check codes for a subset of customer accounts.

7. Security module according to any of the preceding claims,
    wherein the host device is a gateway host device connected to other host devices of said account management system, in particular to end-customer host devices and bank host devices, for exchanging electronic goods, services, data and/or funds.

8. Security module according to claim 7,
    wherein the end-customer host devices are postage meters and the gateway host device is provided by a postage provider.

9. Security module according to claim 7,
    wherein the gateway host device is set-up such that it securely notifies one or more tax or customs authorities about the transfers of funds or goods.

10. Security module according to claim 7, further comprising:

    fund transfer modules for exchanging funds between an end-customer's account at the gateway host device and his account at a bank host device and/or an end-customer host device.

11. Security module according to claim 7 or 10,
    wherein interacting protocol stacks and security critical application control are encapsulated within the security module.

12. Host device for exchanging electronic goods, services, data and/or funds between host devices of an account management system, comprising:

    interfaces for connecting to other host devices of an account management system, in particular to end-customer host devices and bank host devices,
    a database unit for storing account data of a customer account, and
    a security device according to any of the preceding claims.

**13.** Host device according to claim 12,
further comprising means for ensuring the integrity and completeness of all audit and transaction data.

**14.** Account management system comprising:

an end-customer host device,
a bank host device, and
a host device according to claim 12 connected to said end-customer host device and said bank host device for exchanging electronic goods, services, data and/or funds between said host devices.

**15.** Method for exchanging electronic goods, services, data and/or funds between host devices of an account management system, in particular an end-customer host device, a gateway host device and a bank host device, comprising the steps of:

requesting a host device to process account data of a customer account stored in said host device,
generating a customer account specific check code by a management module of a security device of said host device using account data of said customer account, and
verifying said check code to check if the account data of said customer account have been modified before processing the account data of said customer account.

**16.** Method according to claim 15,
wherein in case of a requested fund transfer from an end-customer host device to a gateway host device the end-customer's credit at the end-customer host device is decreased before the end-customer's credit at the gateway host device is increased.

**17.** Method according to claim 15,
wherein in case of a requested fund transfer from a gateway host device to an end-customer host device the end-customer's credit at the gateway host device is decreased before the end-customer's credit at the end-customer host device is increased.

**18.** Method according to any of claims 15 to 17,
wherein the steps of the protocol for fund transfer are provided such that the sum of credits in the end-customer host device and the gateway host device before the start and after termination of the protocol execution are equal.

**19.** Computer program product comprising program code means for causing a computer to perform the method as claimed in any one of claims 15 to 18.

**Patentansprüche**

**1.** Sicherheitsmodul für ein Hostgerät eines Kontenverwaltungssystems mit:

einer Schnittstelle zum Kommunizieren und Austauschen von Daten mit dem Hostgerät,
einem Verwaltungsmodul zum Verarbeiten von Daten und Anfragen,
einem Verzeichnismodul zum Speichern von kundenkontenspezifischen Prüfkodes für in dem Hostgerät gespeicherten Kundenkonten,
einer Kodeerzeugungseinrichtung zum Erzeugen eines Prüfkodes unter Benutzung von Kontendaten eines Kundenkontos, und
einer Verifizierungseinrichtung zum Verifizieren des Prüfkodes, um zu prüfen, ob die Kundendaten des entsprechenden Kundenkontos geändert wurden, im Falle einer Anfrage, Kundendaten des Kundenkontos zu verarbeiten.

**2.** Sicherheitsmodul gemäß Anspruch 1,
wobei der Prüfkode für ein Kundenkonto von dem Verwaltungsmodul unter Benutzung der Kontonummer, des Kundennamen und des Kontowertes des Kundenkontos erzeugt wird.

**3.** Sicherheitsmodul gemäß Anspruch 1 oder 2,
wobei der Prüfkode ein Hash-Kode, ein Message-Authentication-Kode oder eine digitale Signatur ist.

**4.** Sicherheitsmodul gemäß einem der vorstehenden Ansprüche,
ferner mit einer Verschlüsselungs- und Entschlüsselungseinrichtung zum Verschlüsseln von Daten vor dem Austausch mit dem Hostgerät und zum Entschlüsseln von von dem Hostgerät empfangenen Daten.

**5.** Sicherheitsmodul gemäß einem der vorstehenden Ansprüche,
wobei das Sicherheitsmodul in manipulationssicherer oder in auf Manipulationen reagierender Hardware eingekapselt ist.

**6.** Sicherheitsmodul gemäß einem der vorstehenden Ansprüche,
wobei das Sicherheitsmodul durch eine Anzahl von Sicherheitsuntermodulen implementiert ist, von denen jedes eine Teilmenge von Prüfkodes für eine Teilmenge von Kundenkonten speichert.

**7.** Sicherheitsmodul gemäß einem der vorstehenden Ansprüche,
wobei das Hostgerät ein mit anderen Hostgeräten des Kontenverwaltungssystems, insbesondere mit Endkundenhostgeräten und Bankhostgeräten, verbundenes Gatewayhostgerät ist, zum Austausch von elektronischen Waren, Dienstleistungen, Daten und/oder Geldmitteln.

**8.** Sicherheitsmodul gemäß Anspruch 7,
wobei die Endkundenhostgeräte Frankiermaschinen sind und das Gatewayhostgerät von einem Portoprovider bereitgestellt wird.

**9.** Sicherheitsmodul gemäß Anspruch 7,
wobei das Gatewayhostgerät derart eingerichtet ist, dass es auf sichere Weise eine oder mehrere Steuer- oder Zollbehörden über den Transfer von Geldmitteln oder Waren benachrichtigt.

**10.** Sicherheitsmodul gemäß Anspruch 7,
ferner mit Geldmitteltransfermodulen zum Austausch von Geldmitteln zwischen einem Konto eines Endkunden an dem Gatewayhostgerät und seinem Konto bei einem Bankhostgerät und/oder einem Endkundenhostgerät.

**11.** Sicherheitsmodul gemäß Anspruch 7 oder 10,
wobei interagierende Protokollspeicher und eine sicherheitskritische Anwendungssteuerung innerhalb des Sicherheitsmoduls eingekapselt sind.

**12.** Hostgerät zum Austausch von elektronischen Gütern, Dienstleistungen, Daten und/oder Geldmitteln zwischen Hostgeräten eines Kundenkontenverwaltungssystems mit:

Schnittstellen zum Verbinden an andere Hostgeräte eines Kontenverwaltungssystems, insbesondere an Endkundenhostgeräte und Bankhostgeräte,
einer Datenbankeinheit zum Speichern von Kontendaten eines Kundenkontos, und
einem Sicherheitsgerät gemäß einem der vorstehenden Ansprüche.

**13.** Hostgerät gemäß Anspruch 12,
ferner mit einer Einrichtung zum Sicherstellen der Integrität und Vollständigkeit aller Rechnungsprüfungs- und Transaktionsdaten.

**14.** Kontenverwaltungssystem mit:

einem Endkundenhostgerät,
einem Bankhostgerät, und
einem Hostgerät gemäß Anspruch 12, das an das Endkundenhostgerät und das Bankhostgerät zum Austausch von elektronischen Gütern, Dienstleistungen, Daten und/oder Geldmitteln zwischen den Hostgeräten verbunden ist.

**15.** Verfahren zum Austausch von elektronischen Gütern, Dienstleistungen, Daten und/oder Geldmitteln zwischen Hostgeräten eines Kontenverwaltungssystems, insbesondere eines Endkundenhostgeräts, einem Gatewayhostgerät und einem Bankhostgerät, mit den Schritten:

Anfrage bei einem Hostgerät, Kontendaten eines in dem Hostgerät gespeicherten Kundenkontos zu verarbeiten,

Erzeugen eines kundenkontospezifischen Prüfkodes durch ein Verwaltungsmodul eines Sicherheitsgeräts des Hostgeräts unter Benutzung von Kontodaten des Kundenkontos, und

Verifizieren des Prüfkodes, um zu überprüfen, ob die Kundendaten des Kundenkontos geändert wurden, bevor die Kontodaten des Kundenkontos verarbeitet werden.

16. Verfahren gemäß Anspruch 15,
wobei im Falle eines angefragten Geldmitteltransfers von einem Endkundenhostgerät an ein Gatewayhostgerät das Guthaben des Endkunden bei dem Endkundenhostgerät verringert wird, bevor das Guthaben des Endkunden bei dem Gatewayhostgerät erhöht wird.

17. Verfahren gemäß Anspruch 15,
wobei im Falle eines angefragten Geldmitteltransfers von einem Gatewayhostgerät an ein Endkundenhostgerät das Guthaben des Endkunden bei dem Gatewayhostgerät verringert wird, bevor das Guthaben des Endkunden bei dem Endkundenhostgerät erhöht wird.

18. Verfahren gemäß einem der Ansprüche 15 bis 17,
wobei die Schritte des Protokolls zum Geldmitteltransfer derart vorgesehen sind, dass die Summe der Guthaben in dem Endkundenhostgerät und dem Gatewayhostgerät vor dem Beginn und nach der Beendigung der Protokollausführung gleich sind.

19. Computerprogrammprodukt mit Programmkodemitteln zum Veranlassen eines Computers, die Schritte des Verfahrens gemäß einem der Ansprüche 15 bis 18 auszuführen.

**Revendications**

1. Module de sécurité pour un dispositif hôte d'un système de gestion de comptes, comprenant :

   une interface pour la communication et l'échange de données avec le dispositif hôte,
   un module de gestion pour le traitement des données et des demandes,
   un module répertoire pour enregistrer des codes de vérification propres aux comptes de client pour les comptes de client enregistrés dans le dispositif hôte,
   des moyens de génération de codes pour générer un code de vérification à partir des données de compte d'un compte de client, et
   des moyens de vérification pour la vérification du code de vérification pour vérifier si les données de compte du compte de client correspondant ont été modifiées dans le cas d'une demande de traitement des données de compte dudit compte de client.

2. Module de sécurité selon la revendication 1, dans lequel le code de vérification pour un compte de client est généré par ledit module de gestion à partir du numéro de compte, du nom de client et de la valeur de compte dudit compte de client.

3. Module de sécurité selon l'une quelconque des revendications 1 ou 2, dans lequel le code de vérification est un code de hachage, un code d'authentification de message ou une signature numérique.

4. Module de sécurité selon l'une quelconque des revendications précédentes, comprenant en outre des moyens de chiffrage et de déchiffrage pour chiffrer les données avant de les échanger avec le dispositif hôte et pour déchiffrer les données reçues du dispositif hôte.

5. Module de sécurité selon l'une quelconque des revendications précédentes, dans lequel le module de sécurité est encapsulé dans un matériel protégé résistant ou réagissant aux intrusions.

6. Module de sécurité selon l'une quelconque des revendications précédentes, dans lequel le module de sécurité est mis en oeuvre par un certain nombre de sous-modules enregistrant chacun un sous-ensemble de codes de vérification pour un sous-ensemble de comptes de client.

7. Module de sécurité selon l'une quelconque des revendications précédentes, dans lequel le dispositif hôte est un dispositif hôte passerelle relié à d'autres dispositifs hôtes dudit système de gestion de comptes, en particulier aux dispositifs hôtes de client final et aux dispositifs hôtes bancaires, pour échanger des biens, des services, des données et / ou des fonds électroniques.

8. Module de sécurité selon la revendication 7, dans lequel les dispositifs hôtes de client final sont des machines à affranchir et le dispositif hôte passerelle est fourni par un fournisseur de services postaux.

9. Module de sécurité selon la revendication 7, dans lequel le dispositif hôte passerelle est construit de façon à déclarer de façon sécurisée à une ou plusieurs autorités fiscales ou douanières les transferts de fonds ou de biens.

10. Module de sécurité selon la revendication 7, comprenant de plus des modules de transfert de fonds pour échanger des fonds entre le compte d'un client final au niveau du dispositif hôte passerelle et son compte au niveau du dispositif hôte bancaire et / ou d'un dispositif hôte de client final.

11. Module de sécurité selon l'une quelconque des revendications 7 ou 10, dans lequel des piles de protocoles qui interagissent et un contrôle d'application critique de sécurité sont encapsulés à l'intérieur du module de sécurité.

12. Dispositif hôte pour échanger des biens, des services, des données et / ou des fonds électroniques entre les dispositifs hôtes d'un système de gestion de comptes, comprenant :

   des interfaces pour la connexion à d'autres dispositifs hôtes d'un système de gestion de comptes, en particulier à des dispositifs hôtes de client final et des dispositifs hôtes bancaires ;
   une unité de base de données pour enregistrer des données de compte d'un compte de client ; et
   un dispositif de sécurité selon l'une quelconque des revendications précédentes.

13. Dispositif hôte selon la revendication 12, comprenant en outre des moyens pour assurer l'intégrité et le caractère complet de toutes les données d'audit et de transaction.

14. Système de gestion de comptes comprenant :

   un dispositif hôte de client final ;
   un dispositif hôte bancaire ; et
   un dispositif hôte selon la revendication 12, relié audit dispositif hôte de client final et audit dispositif hôte bancaire pour échanger des biens, des services, des données et / ou des fonds électroniques entre lesdits dispositifs hôtes.

15. Procédé pour échanger des biens, des services, des données et / ou des fonds électroniques entre des dispositifs hôtes d'un système de gestion de comptes, en particulier un dispositif hôte de client final, un dispositif hôte passerelle et un dispositif hôte bancaire, comprenant les étapes consistant à :

   demander à un dispositif hôte de traiter les données de compte d'un compte de client enregistré dans ledit dispositif hôte,
   faire générer un code de vérification spécifique au compte de client par un module de gestion d'un dispositif de sécurité dudit dispositif hôte à partir des données de compte dudit compte de client ; et
   vérifier ledit code de vérification pour vérifier si les données de compte dudit compte de client ont été modifiées avant de traiter les données de compte dudit compte de client.

16. Procédé selon la revendication 15, dans lequel, en cas de demande de transfert de fonds de la part d'un dispositif hôte de client final à un dispositif hôte passerelle, le crédit du client final au niveau du dispositif hôte de client final est diminué avant que le crédit du client final au niveau du dispositif hôte passerelle ne soit augmenté.

17. Procédé selon la revendication 15, dans lequel, en cas de demande de transfert de fonds de la part d'un dispositif hôte passerelle à un dispositif hôte de client final, le crédit du client final au niveau du dispositif hôte passerelle est diminué avant que le crédit du client final au niveau du dispositif hôte de client final ne soit augmenté.

18. Procédé selon l'une quelconque des revendications 15 à 17, dans lequel les étapes du protocole exécuté pour le transfert de fonds sont agencées de telle sorte que la somme des crédits dans le dispositif hôte de client final et dans le dispositif hôte passerelle avant le début de l'exécution du protocole, et celle après l'achèvement de l'exécution du protocole, soient égales.

**19.** Produit de programme d'ordinateur comprenant des moyens de code de programme pour permettre à un ordinateur d'exécuter le procédé selon l'une quelconque des revendications 15 à 18.

**Fig. 1**

**Fig. 2 A**

**Fig. 2 B**

**Fig. 2 C**

End-Customer Host ⑩

Hardware Security
Module

⑮

Gateway Host ㉚

Hardware Security
Module

㉟

Bank Host ㊿

## Fig. 3

⑪

# End-Customer Host

~⑩

Host Application ⑭

⑯

## Hardware Security Module

⑳

⑮

Customer Funds Management System

Fulfillment
Service

㉓

B2C Funds
Transfer

㉑

RTOS

㉒

⑬ ⑱

⑲

⑰ ⑫

## Fig. 4

Fig. 5

Fig. 6

Fig. 7

| # | Description | Comments |
|---|---|---|
| A1.1 | $a_1$ = requestTAN($ID$) | request fresh TAN |
| A1.2 | send message $a_1$ to $B$ | |
| B1.1 | copy $b_1$ = $a_1$ | forward $a_1$ unaltered |
| B1.2 | send message $b_1$ to $C$ | |
| C1.1 | extract $ID'\leftarrow ID$ from message $b_1$ = requestTAN($ID$) | |
| C1.2 | choose a 64-bit transaction number $TAN \neq 0$ | use hardware random number generator |
| C1.3 | put the pair ($ID'$, $TAN$) into the TAN buffer | |
| C1.4 | send message $c_1$ = respondTAN($ID'$, $TAN$) back to $B$ | |
| B2.1 | copy $b_2 \leftarrow c_1$ | forward $c_1$ unaltered |
| B2.2 | send message $b_2$ to $A$ | |

Fig. 8 A

accept message $b_2$ = respondTAN($ID'$, $TAN$) if

A2.1    a) it arrives within a specified time-interval after A1, and

      b) $ID' = ID$

A2.2    update internal register $TAN_{last} \leftarrow TAN_{now}$

A2.3    update internal register $TAN_{now} \leftarrow TAN$

A2.4    get requested amount $x$ from end-customer      read $x$ from GUI

 

                                                  $x < 0$ indicates an
upload request,

A.2.5    if $x < 0$ then update *credit* $\leftarrow$ *credit* $+ x$         $x \geq 0$ indicates a
download request

A2.6    compute digital signature
$\sigma \leftarrow sign(sk_A, (ID, TAN_{last}, TAN_{now}, x))$

A2.7    send message $a_2$ = reqFT($ID$, $TAN_{last}$, $TAN_{now}$, $x$, $\sigma$) to B,
where $\sigma$ is the signature computed in step A2.6 above.

 

if $TAN_{last} = 0$

B3.1    then send the actual funds transfer request to C: $b_3 \leftarrow a_2$

      otherwise continue as follows:

B3.2    lookup the response $c_2(TAN_{last})$ in the response database

B3.3    send a roll back request to C:
$b_3 \leftarrow rollBack(a_2, c_2(TAN_{last}))$

 

accept message $b_3$ if and only if it arrives within a specified time-interval after step C1 and either

C2.1a    • $b_3$ = reqFT($ID$, $TAN_{last}$, $TAN_{now}$, $x$, $\sigma$) and      last transaction
        • the pair ($ID$, $TAN_{now}$) is in the TAN buffer and    has been pro-
        • the signature $\sigma$ is valid for message                  cessed success-
          ($ID$, $TAN_{last}$, $TAN_{now}$, $x$)    with respect to the verify    fully
          ing key $vk_{ID}$

C2.1    or                                                             or

        • $b_3$ = rollBack($a_2$, $c_2(TAN_{last})$) where            last transaction
          $a_2$ = reqFT($ID$, $TAN_{last}$, $TAN_{now}$, $x$, $\sigma$)      was aborted
C2.1b      $c_2(TAN_{last})$ = reqFT($ID$, $TAN_{last,0}$, $TAN_{last}$, $x_0$, $\sigma_0$)
        • the pair ($ID$, $TAN_{now}$) is in the TAN buffer and
        • the signatures $\sigma$, $\sigma_0$ are valid for respective messages
          ($ID$, $TAN_{last}$, $TAN_{now}$, $x$) and
          ($ID_0$, $TAN_{last,0}$, $TAN_{now,0}$, $x_0$) with respect to $vk_{ID}$.

# Fig. 8 B

C2.2    delete $(ID, TAN_{now})$ from the TAN buffer

C2.3    if $b_3 = \text{reqFT}(ID, TAN_{last}, TAN_{now}, x, \sigma)$
then update $credit_{ID} \leftarrow credit_{ID} - x$.

update end-customer credit

C2.4    if $b_3 = \text{rollBack}(a_2, c_2(TAN_{last}))$ with
$c_2(TAN_{last}) = \text{reqFT}(ID, TAN_{last,0}, TAN_{last}, x_0, \sigma_0)$
then update $credit_{ID} \leftarrow credit_{ID} - x + x_0$.

rollback aborted transfer and update end-customer credit

C2.5    compute digital signature $\sigma' \leftarrow \text{sign}(sk_C, (ID, TAN_{now}, x))$

C2.6    send message $c_2 = \text{resFT}(ID', TAN', x', \sigma')$, where
$ID' = ID$, $TAN' = TAN_{now}$, and $x' = x$

B4.1    store received message $c_2$ into response database

B4.2    copy $b_4 \leftarrow c_2$

B4.3    send message $b_4$ to $A$

A3.1    accept message $b_4 = \text{resFT}(ID', TAN', x', \sigma')$ if
a) it arrives within certain time interval after step A2
b) signature $\sigma'$ is valid for message $(ID', TAN', x')$ with respect to the verifying key $vk_C$ and
c) $TAN' = TAN_{now}$,
d) $x' = x$

if any of these conditions are not met, then the transaction is aborted and the following steps are skipped

A3.2    update $TAN_{now} \leftarrow 0$.

transaction terminated successfully

A3.3    if $x \geq 0$ then update $credit \leftarrow credit + x$

$x < 0$ indicates an upload request, $x \geq 0$ indicates a download request

## Fig. 8 C

Fig. 9

Fig. 10

Fig. 11

Fig. 12